# FASCICULE DE BREVET EUROPEEN

(11) **EP 0 867 029 B1**
(45) Date de publication et mention de la délivrance du brevet: **20.03.2002**
(21) Numéro de dépôt: 96942396.1
(22) Date de dépôt: 12.12.1996
(51) Int. Cl.: G21F 9/06, G21F 9/04, G21C 19/46

(54) **PROCEDE DE VALORISATION SOUS FORME D'ACIDE NITRIQUE DES IONS NITRATES CONTENUS DANS LES EFFLUENTS DE L'INDUSTRIE NUCLEAIRE**
VERFAHREN ZUR VERWERTUNG VON NITRATIONEN ALS SALPETERSÄURE IN NUKLEAREN ABFALLSTOFFEN
METHOD FOR RECOVERING NITRATE IONS AS NITRIC ACID FROM NUCLEAR INDUSTRY EFFLUENTS

(30) Priorité: 12.12.1995 FR 9514884
(43) Date de publication de la demande: 30.09.1998
(73) Titulaire: Comurhex S.A., 78144 Vélizy-Villacoublay Cédex (FR)
(72) Inventeur: SCHALL, Gilbert, F-11100 Narbonne (FR); FLOREANCIG, Antoine, F-38140 La Murette (FR); DAVIED, Sylvie, F-11100 Narbonne (FR)
(74) Mandataire: Tilloy, Anne-Marie
(86) Numéro de dépôt international: FR9601992
(87) Numéro de publication internationale: WO9722126

(56) Documents cités:
- EP-A- 0 054 607
- FR-A- 2 410 870
- FR-A- 2 417 829
- US-A- 4 225 455
- DATABASE WPI Week 8622 Derwent Publications Ltd., London, GB; AN 86-141014 XP002012537 & JP,A,01 076 991 (ISHIKAWAJIMA) , 19 Avril 1986
- DATABASE WPI Section Ch, Week 8950 Derwent Publications Ltd., London, GB; AN 89-367514 XP002012538 & JP,A,880 102 535 (HITACHI)

## Description

### DOMAINE DE L'INVENTION

L'invention concerne un procédé de valorisation, sous forme d'acide nitrique, des ions nitrates contenus dans les effluents aqueux de l'industrie nucléaire, par décomposition thermique de ces ions nitrates en solution et valorisation dans un milieu aqueux des vapeurs de NOₓ générées par ce traitement thermique.

L'invention concerne également un procédé de valorisation, sous forme d'acide nitrique, des ions nitrates contenus dans les effluents aqueux de l'industrie nucléaire, par décomposition thermique de ces ions nitrates et valorisation dans un milieu aqueux des vapeurs de NOₓ générées, l'acide nitrique étant destiné à être recyclé dans l'industrie nucléaire :
- pour dissoudre les concentrés uranifères provenant du traitement de minerais uranifères ;
- ou pour dissoudre des pastilles de combustibles nucléaires :
   - avant leur mise en oeuvre dans un réacteur nucléaire, c'est-à-dire issues de leur chaîne de production, sous forme de pastilles présentant des défectuosités ou sous forme de déchets issus des étapes telles que le formage ou le pressage de l'oxyde d'uranium ou d'un oxyde mixte pour la préparation des pastilles crues, le frittage sous atmosphère réductrice, ou encore la rectification des pastilles obtenues permettant de les mettre aux cotes et de révéler les éventuels défauts de texture, tels que des fissures ;
   - et/ou en fin de vie, après leur irradiation en réacteur nucléaire, leur sortie du réacteur, leur refroidissement en piscine, leur broyage et la transformation de leurs composants en nitrates.

### ETAT DE LA TECHNIQUE

Dans l'industrie nucléaire, il existe de nombreuses étapes de purification et/ou de transformation de composés en nitrates métalliques, tels que ceux de l'uranium, du plutonium, du thorium, du césium, du ruthénium, du gadolinium, du cérium ou autres encore.
Ces nitrates sont ultérieurement décomposés thermiquement en oxydes métalliques avec l'apparition d'un effluent gazeux qui contient de la vapeur d'eau et des vapeurs nitreuses NOₓ.
Dans son cycle complet, allant de son extraction minière jusqu'à sa mise en oeuvre comme combustible dans les centrales nucléaires, l'uranium, issu des minerais uranifères est livré sous la forme d'un concentré uranifère de diverses compositions telles que uranate de magnésium, de sodium, de potassium, d'ammonium, ou encore des concentrés uranifères formés d'oxydes tels que U₃O₈ ou peroxydes tels que UO₄,nH₂O. Ces concentrés uranifères contiennent encore de nombreuses impuretés, gênantes, qui doivent être éliminées, en raison de leur incompatibilité avec le cycle de l'uranium comportant conversion, enrichissement et fabrication du combustible.
En effet, avant qu'il n'ait les qualités de combustible, l'uranium peut passer par une étape d'hydrofluoration (transformation en UF₄). A partir de cette étape, le tétrafluorure d'uranium obtenu peut conduire, soit à l'élaboration de l'uranium métal alimentant les réacteurs nucléaires à uranium naturel, ou alimentant l'enrichissement par voie laser, soit à une autre étape de fluoration (transformation de UF₄ en UF₆), l'hexafluorure d'uranium obtenu étant la source de matière alimentant des circuits d'enrichissement en uranium par diffusion gazeuse, ultracentrifugation ou enrichissement par laser.

Dès lors, la conversion de l'uranium provenant d'un concentré uranifère peut nécessiter, avant toute autre transformation chimique, une étape de purification pour éliminer les impuretés présentes. Cette purification consiste à traiter le concentré uranifère par de l'acide nitrique qui solubilise non seulement l'uranium sous la forme d'un nitrate d'uranyle, mais aussi les impuretés qui accompagnent le concentré uranifère. Dans le cas des uranates, ces impuretés sont, par exemple, pour les plus importantes, le sodium, le potassium, l'ammonium, le calcium, le magnésium. Dans le cas des concentrés uranifères sous la forme d'oxydes, les impuretés se présentent en quantité beaucoup plus faible.

La solution de nitrate d'uranyle impure est alors traitée au moyen d'un solvant phospho-organique, tel que le tributylphosphate, qui permet l'extraction et l'obtention d'un nitrate d'uranyle pur.

Au terme de cette étape de purification, on obtient un effluent aqueux acide pratiquement dépourvu d'uranium, mais contenant toutes les impuretés initialement présentes dans le concentré uranifère, transformées en nitrates solubles.

Actuellement, cet effluent, qui ne peut être rejeté, tel qu'il est, dans le milieu naturel, est neutralisé, généralement par de la chaux, puis stocké en l'état dans des lagunes étanches où se produit une séparation de phases solide et liquide : la phase liquide se concentre naturellement par une évaporation lente qui est toutefois, pour partie, compensée par les précipitations pluvieuses. Or, la surface de ces lagunes doit augmenter continuellement pour collecter et pouvoir confiner cet effluent au fur et à mesure de son apparition.

On connaît d'après le FR-A-2410870 un procédé pour le traitement d'une solution résiduaire contenant du nitrate d'ammonium issu de l'industrie nucléaire (FR2410870). Ce procédé consiste à pulvériser à l'extrémité supérieure d'un four la solution aqueuse de nitrate d'ammonium dans une zone se trouvant à la température de décomposition dudit nitrate et à évacuer les produits de décomposition par l'extrémité inférieure.

Mais ce procédé :
- concerne pour l'essentiel le traitement du seul nitrate d'ammonium qui se décompose à basse température en donnant dans la zone portée à la température de décomposition des résidus de décomposition gazeux, et non un mélange de nitrates metalliques dont chaque nitrate est tributaire d'une température de décomposition différente de celle des autres et beaucoup plus élevée que la température de décomposition du nitrate d'ammonium et qui conduit à des résidus de décomposition solides et gazeux ;
- réalise la pulvérisation de la solution de nitrates à décomposer par l'intermédiaire d'une buse. Cette pulvérisation donne naissance à des gouttelettes de grosseurs différentes qui tombent dans le four à des vitesses différentes. Ce phénomène provoque une décomposition incomplète du nitrate due pour partie à la différence dimensionnelle des gouttelettes et de ce fait à une cinétique variable de réaction ;
- conduit à des dépôts gênants qui encrassent les parois du four et qui nécessitent leur élimination régulière ;
- est mis en oeuvre au moyen d'éléments chauffants rapportés, ce qui ne permet pas un échange thermique suffisant et homogène.

Tous ces inconvénients font que ce procédé n'est pas applicable au traitement des effluents aqueux contenant en solution un mélange de nitrates.

C'est pourquoi, afin de limiter l'expansion de ces lagunes, l'invention poursuit le but de traiter :
- non seulement la phase aqueuse de ces lagunes ;
- mais également, en direct, les effluents aqueux riches en nitrates d'impuretés, qui sont générés par la dissolution du concentré uranifère et l'extraction de l'uranium par un solvant phospho-organique.

Dès lors, l'invention propose :
- un procédé de valorisation des vapeurs nitreuses NOₓ par leur transformation en HNO₃ et le recyclage de HNO₃ dans le cycle du combustible nucléaire ;
- un procédé de décomposition thermique d'une solution aqueuse de nitrates d'impuretés métalliques ou autres, effluents de l'industrie nucléaire ;
- un procédé permettant le traitement thermique de la phase liquide des lagunes de stockage des effluents aqueux provenant du cycle du combustible nucléaire ;
- un procédé permettant le traitement thermique direct d'une phase aqueuse dans le cycle de l'uranium, cette phase aqueuse résultant de la séparation de deux phases, l'une organique, contenant l'uranium purifié, l'autre aqueuse contenant toutes les impuretés ;
- un procédé permettant le traitement direct de la phase aqueuse contenant toutes les impuretés, par décomposition thermique, sans encrassement par la phase solide des parois de l'installation.

### SOMMAIRE DE L'INVENTION

L'invention a donc pour objet de pallier les inconvénients de l'art antérieur en offrant un procédé qui :
- décompose les nitrates contenus dans une solution aqueuse, quelle que soit la température de décomposition de chaque nitrate présent dans ladite solution ;
- assure une décomposition instantanée de ces nitrates ;
- réalise ladite décomposition à température élevée ;
- évite tout dépôt gênant sur les parois du dispositif correspondant.

Le procédé ainsi créé poursuit le but de réaliser un contact brutal et instantané à la fois thermique et mécanique entre la solution à traiter et un fluide gazeux à haute température et à haute énergie mécanique.

Dès lors, l'invention concerne un procédé de valorisation, sous forme d'acide nitrique, des ions nitrates contenus dans les effluents aqueux de l'industrie nucléaire, constituant une solution, dans lequel
- on réalise la décomposition thermique des ions nitrates en solution, pour former des vapeurs nitreuses NOₓ,
- on récupère l'effluent gazeux contenant les vapeurs nitreuses NOₓ, et
- on transforme les vapeurs nitreuses NOₓ en HNO₃.

Selon l'invention, le procédé se caractérise en ce que :
a) on réalise dans une zone de contact d'une chambre de réaction, le contact thermomécanique entre la solution et un fluide gazeux introduits simultanément dans la chambre de réaction, ledit fluide gazeux étant sous la forme d'un écoulement tourbillonnaire symétrique, coaxial par rapport à l'axe principal de la chambre de réaction, ayant une température au moins égale à la température de décomposition des nitrates à proportion dominante dans la solution, et possédant une énergie mécanique suffisamment forte pour transformer ladite solution en une pulvérisation fine, réaliser en instantané la décomposition de ces nitrates et former des vapeurs nitreuses NOₓ ; et
b) on transforme les vapeurs nitreuses NOₓ en HNO₃ par refroidissement et absorption dans un milieu aqueux.

### DESCRIPTION DETAILLEE DE L'INVENTION

Les solutions aqueuses de nitrates métalliques, dénommés nitrates d'impuretés, effluents de l'industrie nucléaire, contiennent des quantités importantes de sels minéraux, essentiellement sous ladite forme de nitrates mais peuvent également contenir d'autres sels tels que des chlorures, sulfates et fluorures de divers éléments métalliques.

Dans le cas de solutions issues du traitement de concentrés du type uranate, ces solutions sont riches en nitrates de calcium, de sodium et d'ammonium, mais aussi de potassium et de magnésium.

Dans le cas de concentrés uranifères sous la forme d'oxydes, ces solutions aqueuses contiennent en faible quantité des impuretés métalliques telles que, par exemple, du fer, du calcium, du magnésium, de l'aluminium, du potassium et d'autres métaux.

Selon le procédé de l'invention, on réalise dans une zone de contact d'une chambre de réaction, un contact thermomécanique entre une solution aqueuse des nitrates métalliques, effluents de l'industrie nucléaire, et un fluide gazeux doté d'une grande énergie mécanique et doté également d'une température au moins égale à la température de décomposition des nitrates métalliques à proportion dominante dans ladite solution.

La solution aqueuse de nitrates métalliques constituant la phase liquide est généralement introduite selon un axe approprié au niveau de la zone de contact et y est transformée en une pulvérisation fine et homogène.

Le fluide gazeux, doté d'une grande énergie mécanique et thermique, est introduit simultanément à la phase liquide dans la zone de contact sous forme d'un écoulement tourbillonnaire symétrique. Cet écoulement tourbillonnaire, coaxial à l'axe principal de la chambre de réaction, a la propriété de transformer la solution de nitrates métalliques introduite en une dispersion particulièrement affinée de microgouttelettes. Cette solution est saisie par le fluide gazeux, préalablement porté à une température élevée, selon un contact mécanique brutal et bref, et dès lors soumis à un effet thermique suffisant pour provoquer la décomposition instantanée des nitrates métalliques en un mélange pulvérulent composé d'oxydes, de carbonates, des autres nitrates ou d'autres sels ayant des températures de décomposition beaucoup plus élevées que la température pratiquée.

Le mélange pulvérulent d'oxydes métalliques, de carbonates et autres sels provenant de la zone de décomposition, peut être stocké tel quel ou être le siège de transformations mécaniques ultérieures telles que compactage, inertage, vitrification, afin d'en réduire le volume et d'assurer éventuellement les conditions d'un entreposage définitif.

En conséquence, les conditions de fonctionnement du procédé selon l'invention doivent maîtriser la décomposition la plus complète des nitrates métalliques contenus dans la solution aqueuse, dans le but d'en extraire le maximum de vapeurs nitreuses NOₓ recyclables.

En général, les solutions aqueuses riches en ces nitrates métalliques, peuvent contenir jusqu'à environ 800 g/l de NO₃- à recycler, et généralement entre 50 g/l et 700 g/l de NO₃- à recycler.

Mais préalablement à leur décomposition, les solutions aqueuses riches en ces nitrates métalliques peuvent être concentrées par tout moyen approprié.

L'acidité de la phase liquide peut varier dans un large domaine tel que pouvant atteindre au plus environ 5 N : elle n'est pas rédhibitoire pour l'application du procédé selon l'invention.

Le fluide gazeux mis en oeuvre dans le procédé de l'invention est introduit dans la zone de contact, doté d'une grande énergie thermomécanique : il y est introduit sous la forme d'un écoulement tourbillonnaire symétrique.

Selon une variante préférentielle, l'axe de symétrie de l'écoulement tourbillonnaire du fluide gazeux introduit est confondu, non seulement avec l'axe longitudinal de la chambre de réaction, mais également avec celui du dispositif d'injection de la phase liquide.

La chaleur nécessaire à la décomposition du mélange des nitrates métalliques est fournie par le fluide gazeux chaud. Ce fluide gazeux peut être constitué par de l'air, par un gaz inerte tel que l'azote ou par des gaz résultant de la combustion :
- d'un combustible qui peut être de l'hydrogène ou un hydrocarbure, de préférence gazeux, tel que le méthane, l'éthane, le propane, le butane ;
- en présence d'un comburant choisi dans le groupe constitué par l'air, l'oxygène, ou par un mélange des deux.

Le fluide gazeux chaud peut avoir souhaitablement un caractère plus ou moins réducteur, grâce par exemple à la présence d'un gaz réducteur, tel que l'hydrogène, l'oxyde de carbone, ou grâce à une combustion incomplète lorsque le gaz chaud résulte de la combustion d'un combustible en présence d'un comburant.

Quand le fluide gazeux à introduire est de l'air ou un gaz inerte, auquel peut être mêlé un gaz réducteur, il peut être porté à la température souhaitée par un dispositif de chauffage indirect, tel que par exemple un chauffage électrique, externe à la chambre de réaction. Mais lorsque le fluide gazeux à introduire résulte de la combustion d'un combustible en présence d'un comburant, il peut être généré dans une chambre de combustion indépendante de la chambre de réaction (chauffage ex situ) ou associé à la chambre de réaction (chauffage in situ).

La température qui doit régner dans la zone de contact et a fortiori dans la chambre de réaction pour permettre la décomposition instantanée des nitrates métalliques contenus dans la solution à traiter, appelée "température de consigne", est choisie supérieure ou au moins égale à 500°C et préférentiellement supérieure ou au moins égale à 700°C.

La température de consigne agit, soit sur le réglage du moyen de chauffage du fluide gazeux, soit sur le débit d'introduction de la solution des nitrates métalliques à décomposer.

La chambre de réaction dans laquelle s'effectue la décomposition des nitrates métalliques et dans laquelle se trouve la zone de contact où s'établit le contact thermomécanique entre la solution aqueuse de nitrates métalliques constituant la phase liquide et le fluide gazeux doté d'une grande énergie thermomécanique peut être choisie parmi celles décrites par exemple dans le brevet français n° 2257326, dans le brevet européen n° 0007846, dans le brevet US n° 3,041,136, ou encore dans l'article Informations Chimie n° 342 - Octobre 1992.

Au cours de la décomposition des nitrates métalliques en solution aqueuse, il est obtenu d'une part un mélange pulvérulent d'oxydes métalliques, de carbonates et de sels minéraux et d'autre part une phase gazeuse que l'on sépare.

Selon une variante du procédé, on peut incorporer à la solution à traiter des additifs appropriés comme par exemple de l'alumine ou de la silice, afin de faciliter la manipulation du solide obtenu ou encore en vue de son éventuel inertage.

Selon la deuxième étape du procédé de l'invention, la phase gazeuse, résultant de la décomposition des nitrates métalliques présents dans la solution aqueuse traitée, est formée de vapeur d'eau et de vapeurs nitreuses NOₓ. Cette phase gazeuse est refroidie et absorbée par exemple par une solution aqueuse d'acide nitrique en recirculation, dans une zone d'absorption appropriée, selon les conditions bien connues.

L'invention sera mieux comprise grâce aux exemples énoncés à titre seulement illustratif.

### Exemple 1

Cet exemple illustre la valorisation, sous la forme d'acide nitrique, des ions nitrates contenus dans une phase aqueuse, effluent de l'industrie nucléaire. Cette phase aqueuse, dite pieds de colonne, est générée par la dissolution de concentrés uranifères dans l'acide nitrique, l'extraction du nitrate d'uranyle par un solvant organo-phosphoré et la séparation des deux phases, l'une organique, contenant l'uranium et l'autre aqueuse contenant des ions nitrates à valoriser.

Cette solution aqueuse avait la composition suivante, en g/l :

| | |
|---|---|
| NO₃- | 119 |
| NH₄+ | 12,5 |
| F- | 1,4 |
| Cl- | 0,2 |
| SO₄-- | 5,8 |
| SiO₃-- | 0,24 |
| Na | 8,6 |
| K | 1,0 |
| Ca | 0,8 |
| Mg | 1,4 |
| Fe | 1,5 |
| Mo | 0,21 |
| Zr | 0,41 |
| Al | 0,41 |
| P | 0,11 |
| U | 5 ppm |
| HNO₃ | 1,1 N |

L'acide nitrique libre présent dans la solution aqueuse a été extrait par chauffage et la solution à traiter selon le procédé de l'invention a été concentrée jusqu'à atteindre une concentration en nitrates d'environ 250 g/l

Cette dernière solution a été pulvérisée dans une zone de contact d'une chambre de réaction, telle que décrite dans le brevet européen n° 0007846, dans laquelle les gaz chauds sont produits in situ par la combustion complète de propane.
Les gaz chauds produits, dotés d'une énergie thermomécanique élevée arrivaient dans la zone de contact simultanément avec la phase liquide sous l'aspect d'un écoulement tourbillonnaire symétrique (coaxialement avec le dispositif d'introduction de la solution).
Le débit de la solution introduite était de 20 litres/heure.

La température de consigne de décomposition des nitrates était de 800°C : cette température régulait le débit de propane mis en oeuvre dans la chambre de combustion. La température des gaz était d'environ 1500°C.

De la chambre de réaction, on a extrait une poudre fine d'oxydes métalliques, de carbonates, et de sels minéraux non décomposés à cette température.

Quant à la phase gazeuse résultant de la décomposition des nitrates présents dans la solution aqueuse traitée, elle était formée de vapeur d'eau et de vapeurs nitreuses NOₓ. Cette phase gazeuse a été introduite, après refroidissement dans une zone d'absorption parcourue à contre courant par une solution aqueuse de HNO₃ en recirculation. De cette zone d'absorption était extrait de l'acide nitrique à environ 4 N.

### Exemple 2

Cet exemple illustre la valorisation, sous la forme d'acide nitrique, des ions nitrates contenus en solution dans une phase aqueuse provenant des liquides surnageants des lagunes de stockage des effluents aqueux issus de l'industrie du nucléaire.
La solution aqueuse à traiter avait la composition suivante, en g/l :

| | |
|---|---|
| NO₃- | 625,0 |
| Ca | 95,0 |
| NH₄+ | 62,0 |
| Na | 41,0 |
| K | 12,0 |
| Mg | 6,0 |
| Cl- | 3,0 |
| Ni | 0,110 |
| Co | 0,025 |

Cette solution a été pulvérisée dans une zone de contact d'une chambre de réaction telle que décrite dans le brevet français n° 2257326, au moyen d'un courant d'air chauffé électriquement à une température de 11000C.

Les gaz chauds produits, dotés d'une énergie thermomécanique élevée arrivaient dans la zone de contact simultanément avec la phase liquide sous l'aspect d'un écoulement tourbillonnaire symétrique (coaxialement avec le dispositif d'introduction de la solution).
Le débit de la solution aqueuse introduite était de 10 litres/heure.

La température de consigne de décomposition des nitrates était de 700°C : cette température régulait le débit de gaz chauds dans la chambre de réaction.

De la chambre de réaction, on a extrait une poudre fine d'oxydes métalliques et de sels minéraux non décomposés à cette température : la teneur en nitrates résiduaires était de l'ordre de 7 % en poids.

Quant à la phase gazeuse résultant de la décomposition des nitrates présents dans la solution aqueuse traitée, elle était formée de vapeur d'eau et de vapeurs nitreuses NOₓ. Cette phase gazeuse a été introduite, après refroidissement dans une zone d'absorption parcourue à contre courant par une solution aqueuse de HNO₃ en recirculation. De cette zone d'absorption était extrait de l'acide nitrique à environ 4 N.

### Exemple 3

Cet exemple illustre la valorisation, sous la forme d'acide nitrique, des ions nitrates contenus dans une solution aqueuse dite pieds de colonne, effluent de l'industrie uranifère : l'obtention d'une telle solution aqueuse a été décrite dans l'exemple 1.

Cette solution aqueuse avait la composition suivante en g/l :

| | |
|---|---|
| NO₃- | 129,1 |
| NH₄+ | 11,5 |
| F- | 1,4 |
| Cl- | 0,2 |
| SO₄-- | 5,7 |
| SiO₃-- | 0,19 |
| Na | 4,1 |
| K | 1,3 |
| Ca | 0,9 |
| Mg | 1,4 |
| Fe | 1,5 |
| Mo | 0,20 |
| Zr | 0,27 |
| Al | 0,42 |
| P | 0,10 |
| U | 10 ppm |
| HNO₃ | 1,1 N |

Cette solution aqueuse a été concentrée sous vide en donnant d'une part une solution pure de HNO₃ 0,7 N et une solution riche en nitrates à décomposer.

La solution pure de HNO₃ a été concentrée jusqu'à obtenir une teneur en HNO₃ de 10,2 N.
La solution riche en nitrates à décomposer, qui contenait tous les sels minéraux de l'effluent pieds de colonne précité, avait une teneur en nitrate de 350 g/l et une acidité de 2,1 N.

La solution riche en nitrates à décomposer a été pulvérisée dans la zone de contact d'une chambre de réaction, telle que décrite dans le brevet européen n° 0007846, dans laquelle des gaz chauds sont produits in situ par la combustion complète de propane.

Les gaz chauds produits, dotés d'une énergie thermomécanique élevée, arrivaient dans la zone de contact simultanément avec la phase liquide sous l'aspect d'un écoulement tourbillonnaire symétrique (coaxialement avec le dispositif d'introduction de la solution).
Le débit de la solution aqueuse introduite était de 15 litres/heure.

La température de consigne de décomposition des nitrates était de 750°C : cette température régulait le débit de gaz chauds dans la chambre de réaction. La température des gaz était d'environ 1300°C.

De la chambre de réaction, on a extrait une poudre fine d'oxydes métalliques, de carbonates et de sels minéraux non décomposés à cette température.

Quant à la phase gazeuse résultant de la décomposition des nitrates présents dans la solution aqueuse traitée, elle était formée de vapeur d'eau et de vapeurs nitreuses NOₓ. Cette phase gazeuse a été introduite, après refroidissement, dans une zone d'absorption parcourue à contre courant par une solution aqueuse de HNO₃ en recirculation. De cette zone d'absorption était extrait de l'acide nitrique à environ 2 N.

## Revendications

1. Procédé de valorisation, sous forme d'acide nitrique, des ions nitrates contenus dans les effluents aqueux de l'industrie nucléaire, constituant une solution, dans lequel
- on réalise la décomposition thermique des ions nitrates en solution, pour former des vapeurs nitreuses NOₓ,
- on récupère l'effluent gazeux contenant les vapeurs nitreuses NOₓ, et
- on transforme les vapeurs nitreuses NOₓ en HNO₃,
**caractérisé en ce que**
a) on réalise dans une zone de contact d'une chambre de réaction, le contact thermomécanique entre la solution et un fluide gazeux introduits simultanément dans la chambre de réaction, ledit fluide gazeux étant sous la forme d'un écoulement tourbillonnaire symétrique, coaxial par rapport à l'axe principal de la chambre de réaction, ayant une température au moins égale à la température de décomposition des nitrates à proportion dominante dans la solution, et possédant une énergie mécanique suffisamment forte pour transformer ladite solution en une pulvérisation fine, réaliser en instantané la décomposition de ces nitrates et former des vapeurs nitreuses NOₓ ; et
b) on transforme les vapeurs nitreuses NOₓ en HNO₃ par refroidissement et absorption dans un milieu aqueux.

2. Procédé selon la revendication 1, **caractérisé en ce que** la solution aqueuse de nitrates contient principalement des nitrates de calcium, de sodium, d'ammonium, de potassium et de magnésium.

3. Procédé selon la revendication 1 ou 2, **caractérisé en ce que** la solution aqueuse des nitrates métalliques contient au plus 800g/l de NO₃⁻ et, en général, de 50g/l à 700g/l de NO₃⁻.

4. Procédé selon la revendication 3, **caractérisé en ce que** la solution aqueuse contenant les nitrates métalliques est concentrée préalablement à la décomposition.

5. Procédé selon l'une quelconque des revendications 1 à 4, **caractérisé en ce que** la solution aqueuse des nitrates métalliques a une acidité au plus d'environ 5N.

6. Procédé selon la revendication 1, **caractérisé en ce que** l'axe du dispositif d'injection de la phase aqueuse est coaxial avec l'axe de symétrie de l'écoulement tourbillonnaire du fluide gazeux introduit et l'axe longitudinal de la chambre de réaction.

7. Procédé selon l'une quelconque des revendications 1 à 6, **caractérisé en ce que** le fluide gazeux est constitué par de l'air ou par un gaz inerte.

8. Procédé selon la revendication 7, **caractérisé en ce que** le gaz inerte est de l'azote.

9. Procédé selon la revendication 7 ou 8, **caractérisé en ce que** le fluide gazeux comporte un agent réducteur qui est de l'hydrogène ou de l'oxyde de carbone.

10. Procédé selon l'une quelconque des revendications 1 à 9, **caractérisé en ce que** le fluide gazeux est porté à la température souhaitée par un dispositif de chauffage indirect électrique externe à la chambre de réaction.

11. Procédé selon l'une quelconque des revendications 1 à 6, **caractérisé en ce que** le fluide gazeux est constitué de gaz de combustion.

12. Procédé selon la revendication 11, **caractérisé en ce que** le fluide gazeux résulte de la combustion d'hydrogène ou d'un hydrocarbure en présence d'un comburant.

13. Procédé selon la revendication 11 ou 12, **caractérisé en ce que** l'hydrocarbure est choisi dans le groupe constitué par le méthane, l'éthane, le propane, le butane.

14. Procédé selon la revendication 12, **caractérisé en ce que** le comburant est choisi dans le groupe formé par l'air, l'oxygène, un mélange des deux.

15. Procédé selon l'une quelconque des revendications 11 à 14, **caractérisé en ce que** le fluide gazeux est rendu réducteur par une combustion incomplète.

16. Procédé selon l'une quelconque des revendications 11 à 15, **caractérisé en ce que** le fluide gazeux résultant de la combustion d'un combustible en présence d'un comburant est généré dans une chambre de combustion externe, indépendante de la chambre de réaction.

17. Procédé selon l'une quelconque des revendications 11 à 15, **caractérisé en ce que** le fluide gazeux résultant de la combustion d'un combustible en présence d'un comburant est généré dans une chambre de combustion interne, dépendante de la chambre de réaction.

18. Procédé selon l'une quelconque des revendications 1 à 17, **caractérisé en ce que** la température de décomposition instantanée, ou température de consigne, se situe à au moins 500°C et préférentiellement à au moins 700°C.

19. Procédé selon l'une quelconque des revendications 1 à 18, **caractérisé en ce que** la température de consigne agit sur le réglage du moyen de chauffage du fluide gazeux ou sur le débit d'introduction de la solution aqueuse de nitrates métalliques à décomposer.

20. Application de l'une quelconque des revendications 1 à 19 à la production et au recyclage de HNO₃.

21. Application selon la revendication 20 à la dissolution de concentrés uranifères.

22. Application selon la revendication 20 à la dissolution des pastilles de combustibles nucléaires avant leur mise en oeuvre et en fin de vie, après leur irradiation en réacteur nucléaire.

## Patentansprüche

1. Verfahren zur Verwertung der in den wässrigen Abfallstoffen der Nuklearindustrie, die eine Lösung bilden, enthaltenen Nitrationen in Form von Salpetersäure, in dem man
- eine thermische Zersetzung der Nitrationen in Lösung durchführt um nitrose Gase NOx zu bilden,
- das Abgas, welches die nitrosen Gase NOx enthält, zurückgewinnt und
- die nitrosen Gase NOx in HNO₃ umwandelt,
**dadurch gekennzeichnet, dass**
a) man in einer Kontaktzone einer Reaktionskammer den thermomechanischen Kontakt zwischen der Lösung und einem gasförmigen Fluid, die gleichzeitig in die Reaktionskammer eingeleitet werden, herstellt, wobei das genannte gasförmige Fluid in Form einer symmetrischen wirbelförmigen Strömung vorliegt, die koaxial ist zu der Hauptachse der Reaktionskammer, eine Temperatur hat, die mindestens gleich der Zersetzungstemperatur der Nitrate mit vorherrschendem Anteil in der Lösung ist, und eine mechanische Energie besitzt, die genügend hoch ist, um die genannte Lösung in eine feine Zerstäubung zu überführen, augenblicklich die Zersetzung dieser Nitrate auszuführen und nitrose Gase NOx zu bilden, und
b) dass man die nitrosen Gase NOx durch Abkühlung und Absorption in einem wässrigen Medium in HNO₃ umwandelt.

2. Verfahren nach Anspruch 1, **dadurch gekennzeichnet, dass** die wässrige Nitratlösung hauptsächlich Nitrate von Calcium, Natrium, Ammonium, Kalium und Magnesium enthält.

3. Verfahren nach Anspruch 1 oder 2, **dadurch gekennzeichnet, dass** die wässrige Lösung der Metallnitrate höchstens 800 g/l NO₃- und im Allgemeinen 50 g/l bis 700 g/l NO₃- enthält.

4. Verfahren nach Anspruch 3, **dadurch gekennzeichnet, dass** die wässrige Lösung, die die Metallnitrate enthält, vor der Zersetzung konzentriert wird.

5. Verfahren nach einem der Ansprüche 1 bis 4, **dadurch gekennzeichnet, dass** die wässrige Lösung der Metallnitrate eine Acidität von höchstens ungefähr 5N hat.

6. Verfahren nach Anspruch 1, **dadurch gekennzeichnet, dass** die Achse der Vorrichtung zur Einspritzung der wässrigen Phase mit der Symmetrieachse der wirbelförmigen Strömung des eingeleiteten gasförmigen Fluids und mit der Längsachse der Reaktionskammer koaxial ist.

7. Verfahren nach einem der Ansprüche 1 bis 6, **dadurch gekennzeichnet, dass** das gasförmige Fluid aus Luft oder aus einem inerten Gas besteht.

8. Verfahren nach Anspruch 7, **dadurch gekennzeichnet, dass** das inerte Gas Stickstoff ist.

9. Verfahren nach Anspruch 7 oder 8, **dadurch gekennzeichnet, dass** das gasförmige Fluid ein Reduktionsmittel enthält, das Wasserstoff oder Kohlenmonoxid ist.

10. Verfahren nach einem der Ansprüche 1 bis 9, **dadurch gekennzeichnet, dass** das gasförmige Fluid durch eine Vorrichtung zur indirekten elektrischen Beheizung außerhalb der Reaktionskammer auf die gewünschte Temperatur gebracht wird.

11. Verfahren nach einem der Ansprüche 1 bis 6, **dadurch gekennzeichnet, dass** das gasförmige Fluid aus Verbrennungsgas besteht.

12. Verfahren nach Anspruch 11, **dadurch gekennzeichnet, dass** das gasförmige Fluid aus der Verbrennung von Wasserstoff oder eines Kohlenwasserstoffs in Gegenwart eines Sauerstoffträgers hervorgeht.

13. Verfahren nach Anspruch 11 oder 12, **dadurch gekennzeichnet, dass** der Kohlenwasserstoff in der Gruppe gewählt ist, die gebildet wird von Methan, Ethan, Propan, Butan.

14. Verfahren nach Anspruch 12, **dadurch gekennzeichnet, dass** der Sauerstoffträger in der Gruppe gewählt ist, die gebildet wird von Luft, Sauerstoff, einer Mischung der beiden.

15. Verfahren nach einem der Ansprüche 11 bis 14, **dadurch gekennzeichnet, dass** das gasförmige Fluid durch eine unvollständige Verbrennung reduzierend gemacht ist.

16. Verfahren nach einem der Ansprüche 11 bis 15, **dadurch gekennzeichnet, dass** das aus der Verbrennung eines Brennstoffs in Gegenwart eines Sauerstoffträgers hervorgehende gasförmige Fluid in einer äußeren Verbrennungskammer erzeugt wird, die unabhängig von der Reaktionskammer ist.

17. Verfahren nach einem der Ansprüche 11 bis 15, **dadurch gekennzeichnet, dass** das aus der Verbrennung eines Brennstoffs in Gegenwart eines Sauerstoffträgers hervorgehende gasförmige Fluid in einer inneren Verbrennungskammer erzeugt wird, die abhängig von der Reaktionskammer ist.

18. Verfahren nach einem der Ansprüche 1 bis 17, **dadurch gekennzeichnet, dass** die Temperatur der sofortigen Zersetzung oder Vorgabetemperatur bei mindestens 500°C und vorzugsweise bei mindestens 700°C liegt.

19. Verfahren nach einem der Ansprüche 1 bis 18, **dadurch gekennzeichnet, dass** die Vorgabetemperatur auf die Regulierung der Heizeinrichtung des gasförmigen Fluids oder auf die Einleitungsrate der wässrigen Lösung zu zersetzender Metallnitrate einwirkt.

20. Anwendung eines der Ansprüche 1 bis 19 auf die Herstellung und auf die Rückführung von HNO₃.

21. Anwendung nach Anspruch 20 auf die Auflösung uranhaltiger Konzentrate.

22. Anwendung nach Anspruch 20 auf die Auflösung der Kernbrennstofftabletten vor ihrem Einsatz und am Lebensende nach ihrer Bestrahlung in einem Kernreaktor.

## Claims

1. Process for recovering, in the form of nitric acid, the nitrate ions present in the aqueous effluents from the nuclear industry, forming a solution in which:
- thermal decomposition of nitrate ions in solution is carried out to form nitrous vapours of NOₓ,
- gaseous effluent containing nitrous vapours of NOₓ is recovered,
- nitrous vapours of NOₓ are converted into HNO₃,
**characterized in that**:
a) in a contact zone of a reaction chamber. thermomechanical contact is produced between the solution and a gaseous fluid introduced simultaneously into the reaction chamber, said gazeous fluid being in the form of a symmetrical whirling flow, coaxial to the main axis of the reaction chamber, at a temperature that is at least equal to the decomposition temperature of the nitrates in a dominant proportion in the solution and having a mechanical energy that is sufficiently high to convert said solution in a fine pulverization and to carry out instantaneously the decomposition of these nitrates and to form nitrous vapours of NOₓ; and
b) the nitrous vapours of NOₓ are converted into HNO₃ by cooling and absorption in an aqueous medium.

2. Process according to Claim 1, **characterized in that** the aqueous solution of nitrates contains chiefly calcium, sodium, ammonium, potassium and magnesium nitrates.

3. Process according to Claim 1 or 2, **characterized in that** the aqueous solution of the metal nitrates contains at most 800 g/l of NO₃⁻ and, in general, from 50 g/l to 700 g/l of NO₃⁻.

4. Process according to Claim 3, **characterized in that** the aqueous solution containing the metal nitrates may be concentrated prior to the decomposition.

5. Process according to any one of Claims 1 to 4, **characterized in that** the aqueous solution of the metal nitrates has an acidity of at most about 5 N.

6. Process according to claim 1, **characterized in that** the axis of the aqueous phase injection device is coaxial with the axis of symmetry of the introduced gazeous fluid whirling flow and the reaction chamber longitudinal axis.

7. Process according to any one of Claims 1 to 6, **characterized in that** the gaseous fluid consists of air, or an inert gas.

8. Process according to Claim 7, **characterized in that** the inert gas is nitrogen.

9. Process according to Claim 7 or 8, **characterized in that** the gaseous fluid includes a reducing agent which is hydrogen or carbon oxide.

10. Process according to any of Claims 1 to 9, **characterized in that** the gaseous fluid is heated to the desired temperature by an electrical indirect heating device external to the reaction chamber.

11. Process according to any one of Claims 1 to 6 **characterized in that** the gazeous fluid consists of combustion gas.

12. Process according to claim 11, **characterized in that** the gaseous fluid results from the combustion of hydrogen or of a hydrocarbon in the presence of an oxidant.

13. Process according to Claim 11 or 12, **characterized in that** the hydrocarbon is chosen from the group consisting of methane, ethane, propane, butane.

14. Process according to Claim 12, **characterized in that** the oxidant is chosen from the group consisting of air, oxygen, or of a mixing of both.

15. Process according to any one of Claims 11 to 14, **characterized in that** the gaseous fluid is made reductant by an incomplete combustion.

16. Process according to any one of Claims 11 to 15 **characterized in that** the gaseous fluid resulting from the combustion of a fuel in the presence of an oxidant is generated in an external combustion chamber independent on the reaction chamber.

17. Process according to any one of Claims 11 to 15, **characterized in that** the gaseous fluid resulting from the combustion of a fuel in the presence of an oxidant is generated in an internal combustion chamber dependent on the reaction chamber.

18. Process according to any one of Claims 1 to 17, **characterized in that** the temperature of instantaneous decomposition, or set temperatures, is situated at at least 500°C and preferably at at least 700°C.

19. Process according to any one of Claims 1 to 18, **characterized in that** the set temperature acts upon the regulation of the heating means of the gaseous fluid or upon the feed flow rate of the aqueous solution of metal nitrates to be decomposed.

20. Application of any one of Claims 1 to 19 to the production and to the recycling of HNO₃.

21. Application according to Claim 20, to the dissolving of uranium-bearing concentrates.

22. Application according to Claim 20, to the dissolving of the nuclear fuel pellets before they are implemented and at the end of life, after their irradiation in a nuclear reactor.
